# EUROPEAN PATENT APPLICATION

(11) **EP 0 723 368 A2**
(43) Date of publication of application: **24.07.1996**
(21) Application number: 96300290.2
(22) Date of filing: 16.01.1996
(51) Int. Cl.: H04N 5/64

(54) **Video monitor suspension system**

(30) Priority: 17.01.1995 US 372948
(71) Applicant: ERGOTRON, INC., Eagan, MN 55121 (US)
(72) Inventor: Sweere, Harry C., Minneapolis, MN 55417 (US); Wucherpfenning, Frederick D., Bloomington, MN 55437 (US); Voeller, Donald M., Eagan, MN 55121 (US)
(74) Representative: Parr, Ronald Edward R.E. Parr & Co.

(57) **Abstract**

A video monitor suspension system including four bar linkages spaced along an angled arm for adjustable and positionable vertical and horizontal support of a video monitor or the like. A weight counter balance adjustment mechanism adjustably compensates for various weights of a load held by the angled arm. Gas springs provide for vertical support of the angled arm. Configured slots in which the upper ends of the gas springs position provide for minimal manual positioning effort and a linear counterbalance throughout the entire range of vertical adjustment. An arm bent at an angle of 120° overcomes the traditional interference of the load with movement of the arm beyond 45°.

## Description

The present invention relates to a suspension system for cathode ray tubes. The suspension system is suitable for the suspension or other support of, for example, video monitors or television screens; it is with particular reference to video monitors that the invention is hereinafter described.

Preferred forms of the invention pertain, first, to a video monitor suspension system incorporating supporting gas springs in conjunction with predetermined arced slots or tracks and, secondly, to four bar linkages to maintain parallel geometry of the supported video monitor. These first and second forms can, if desired be used in conjunction with each other.

In the past, video monitors have been fixed in one position or secured to an arm having no or very limited movement. This has proved to be a substantial disadvantage especially in applications or environments, for example in hospitals where it would be valuable to provide for a wide range of movements of video monitors.

The present invention overcomes the disadvantages of the prior art in that it provides a video monitor suspension system which can suspend or otherwise support a monitor or monitor support caddy or housing so as to permit a wide latitude of movement, for example movement over a wide range of angles, such as between eyesight level for reading the monitor and head level for its storage.

According to a first aspect, the present invention provides a suspension system for a video monitor, characterised in that the system comprises:
an arm, a first end portion of which is pivotally attachable to a wall or other substantially vertical support whereby the arm is pivotable in a substantially vertical path, and whose other end portion is pivotally attached to a carrier for the video monitor;
maintaining means to maintain the carrier in substantially the same angular disposition to the ground irrespective of the position of the arm in said vertical path; and
holding means to hold the arm in any desired position in said vertical path.

The substantially vertical support and the carrier for the video monitor are also referred to herein as "major bracket" and "minor bracket", respectively.

In the suspension system of the invention the arm is normally an elongate arm having first and second, spaced apart ends. In a preferred form of the invention the arm is a cranked or angled arm comprising first and second straight portions so disposed to each other so as to define a downwardly facing obtuse angle.

Where a substantially vertical support rather than a wall is used for attachment to the arm that support is preferably mounted for rotation about a substantially vertical axis thereby to provide lateral movement of the carrier as well as movement in a vertical direction.

The movement of the pivoted arm in a substantially vertical path or direction is preferably such that the carrier can move from a storage position in which the video monitor is normally not used; usually this storage position is at or near the uppermost extremity of the range of vertical movement though, if desired, it can be at or near the lowermost extremity of said movement. The vertical movement also provides one, two, three or more viewing stations disposed, for example, at different heights from the ground.

The maintaining means to maintain the carrier in substantially the same angular disposition to the ground can be, for example, a linkage linking the carrier to the wall or other substantially vertical support.

The holding means to hold the arm in any desired position in said vertical path comprises, for example, counterbalance means, preferably counterbalance means that can be overcome by manual force, thereby to move the arm from a first to a second position or station in the vertical path. In a preferred form of the invention the counterbalance means comprises one, two or more gas springs or dashpots operatively interconnecting the arm to the wall or substantially vertical support.

According to one embodiment of the present invention, there is provided a suspension system for a video monitor or other such associated devices, including a vertically aligned swivelled major bracket, an angled support arm pivotally attached to the major bracket, a minor bracket pivotally attached to one end of an angled support arm, four bar linkages between the major and minor brackets which maintains horizontal stability of the minor bracket so that a suspended load remains plumb, a weight counter balance adjuster mechanism secured to the underside of the support arm, arced slots in the weight counter balance adjuster mechanism, and gas springs supporting the weight counter balance adjuster mechanism, arm and its suspended load such as a video monitor.

Preferred embodiments of the invention have one or more of the following features.
(a) the suspension system pivots about a vertical axis.
(b) the suspension system has a vertical angular motion adjustment of 90°. The resulting moment on the support mechanism is varied between a short moment, a longer moment, and then a shorter moment as the suspension arm is positioned vertically.
(c) the vertical range of movement of the suspension system is greater than the length of the arm. For example and illustration, an arm of 22" in length (for example an angled arm) provides for a vertical movement of 30".
(d) the use of four bar linkages along an angled arm to maintain vertical orientation of a bearing mount containing a swivel mount in which a monitor support bracket or caddy is secured and suspended.
(e) the use of a weight counter balance adjuster mechanism having arced slots, derived, for example, by use of an algorithm or computer analysis.
(f) the use of gas springs for support of the arm and its load.
(g) the use of an arm down-lock to prevent arm runaway when a supported load such as a video monitor is removed from the end of the support arm.
(h) the use of an automatically engaging up-lock and release lever, (for example, a hidden release lever) to provide for protection from catastrophic failure of gas springs or operation by unauthorized personnel.
(i) the elimination of load interference through the use of an angled arm.
(j) the arm is angled so as not to interfere with its range of movement.
(k) said angular disposition is such that a video monitor supported by the carrier is disposed substantially parallel to the ground.

There now follows further description of the invention including, by way of example and with reference to the accompanying drawings, specific embodiments of a suspension system for a video monitor.

In the drawings:
FIG. 1 illustrates an isometric view of the suspension system;
FIG. 2 illustrates a right side view of the suspension system;
FIG. 3 illustrates a view along line 3-3 of FIG. 2 of the weight counter-balance adjuster mechanism of the suspension system;
FIG. 4 illustrates a front view of the suspension system;
FIG. 5 illustrates a top view of the suspension system;
FIG. 6 illustrates a top view of the major bracket pivotal attachment to a slotted mounting track;
FIG. 7 illustrates a side view in cutaway of the automatic up lock mechanism;
FIG. 8 illustrates the range of vertical movement of the arm;
FIG. 9 illustrates the suspension system secured to a wall in an upper locked position;
FIG. 10 illustrates the suspension system in use with a ceiling well;
FIG. 11 illustrates an isometric view of the tilt and swivel mount; and
FIG. 12 illustrates a front view of the tilt and swivel mount.

### DETAILED DESCRIPTION OF THE PREFERRED EMBODIMENTS

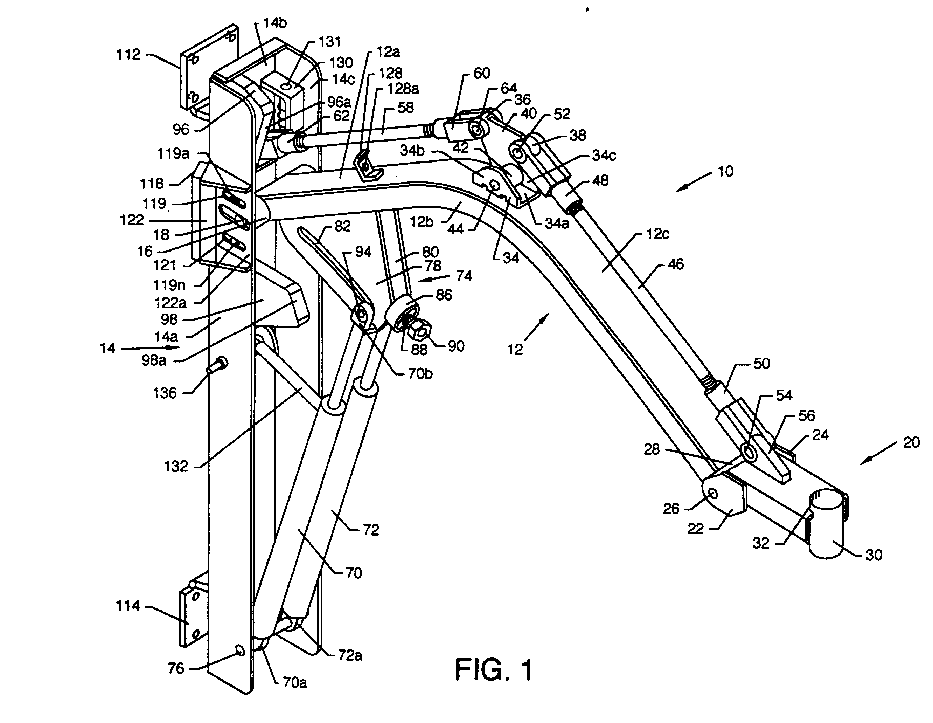

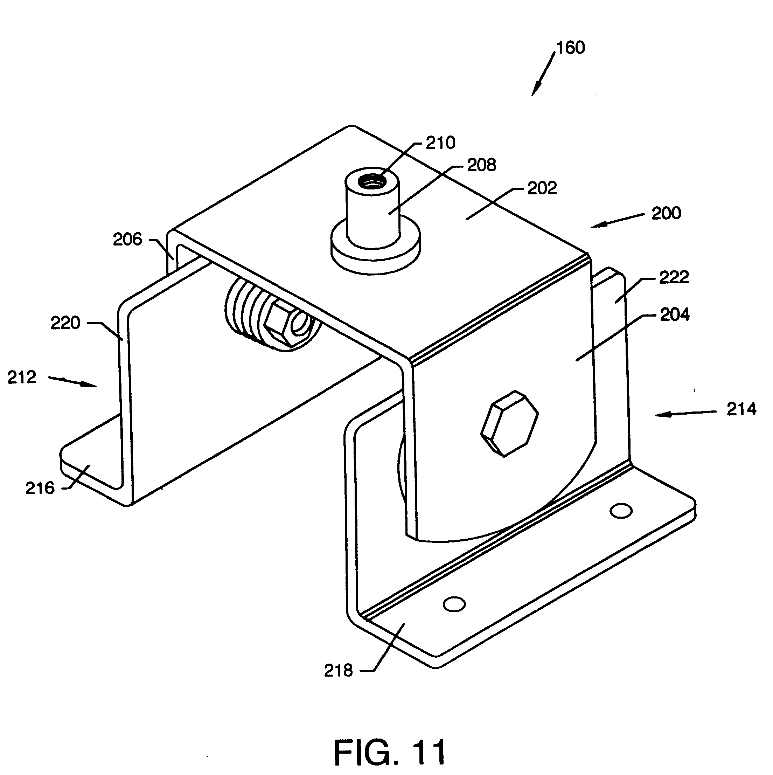

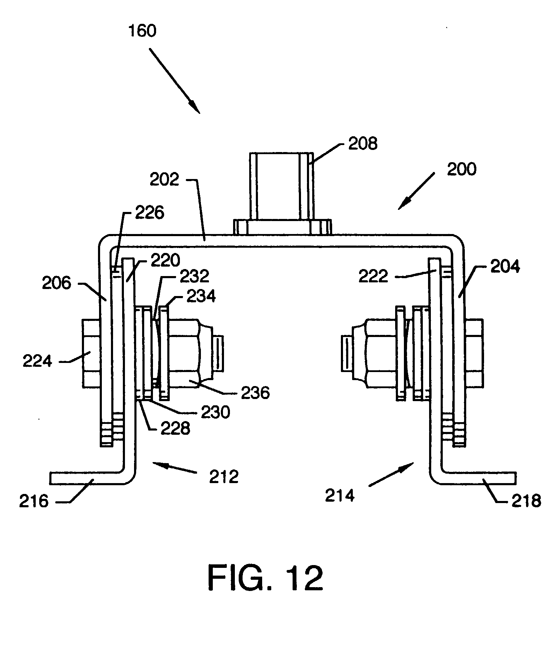

**FIG. 1** illustrates an isometric view of a video monitor suspension system 10 of the present invention. An angled arm 12 constructed of rectangular tubing pivotally secures on one end to a major bracket 14 of channel steel or aluminum. The vertically aligned major bracket 14 includes a planar back member 14b and opposing side planar members 14a and 14c extending perpendicularly from the common planar back surface 14b. The one piece arm 12 includes straight portions 12a and 12c aligned to angles to each other with an intermediate curved portion 12b located therebetween. The inboard end of the straight arm portion 12a aligns to and is secured such as by a weldment to a horizontally aligned pivot tube 16. A pivot pin 18 aligns through the planar side members 14a and 14c to pivotally secure the arm 12 to the major bracket 14. A minor bracket 20 of rectangular tubing pivotally secures to the outboard end of the straight arm portion 12c. Vertically aligned and opposing plates 22 and 24 secure appropriately to the vertical sides of the minor bracket 20. A pivot tube 28 at the end of the straight arm portion 12c aligns between the opposing plates 22 and 24. A pivot pin 26 extends horizontally through the opposing plates 22 and 24 and through a pivot tube 28 secured to the outboard end of the straight arm portion 12c. A vertically aligned cylindrical bearing mount 30 secures such as by welding to a semi-circular cutout 32 in the outboard end portion of the minor bracket 20. The cylindrical mount 30 supports a tilt and swivel mount 160 illustrated in **FIGS. 11** and 12 such as like that referenced in the assignee's U.S. Patents No. 4,453,687.

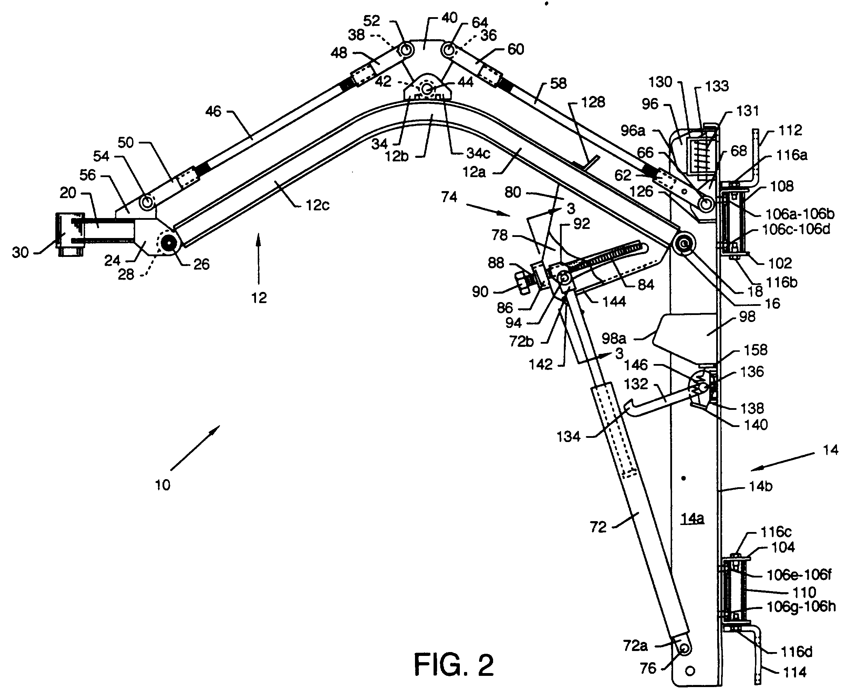

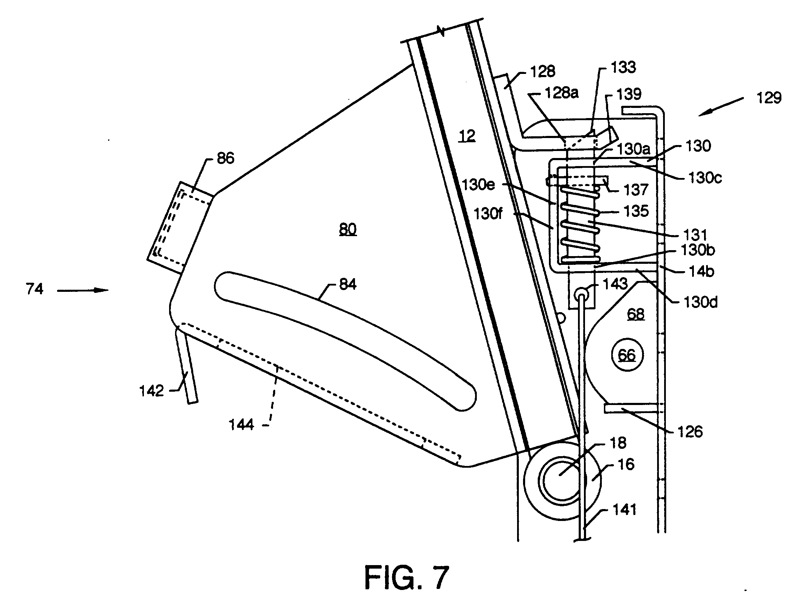

Four bar linkages function to substantially maintain horizontal alignment of the minor bracket 20 and a video monitor bearing caddy which attaches to the bearing mount 30 by the referenced swivel fixture. The arm 12 is adjustable throughout a range of vertical adjustment as illustrated in FIG. 7 in which the minor bracket 20 and its load remain in plumb alignment. Various mounts, pivots, control rods, control links, and the like are secured to the arm 12, and major and minor brackets 12 and 20 as now described. A centrally located and secured to the arm 12 at the upper surface of the curved portion 12b is a control link bracket 34 having a planar bottom 34a, and planar sides 34b and 34c extending perpendicularly from the planar bottom 34a. Spacer tubes 36 and 38 secure to the upper apexes of a planar and triangular center link 40, and a spacer tube 42 secures to the lower apex of the center link 40. Pivot pin 44 extends the planar sides 34b and 34c of the control link bracket 34 to pivotally secure the center link 40 to the arm 12. An outboard control linkage rod 46 having opposing linkage connectors 48 and 50, threadingly and adjustably attached, secures to the triangular center link 40 by a pivot pin 52 secured through the end members of the linkage connector 48 and spacer tube 38. The other end of the outboard control linkage rod 46 secures by a pivot pin 54 to a vertically aligned link attachment bracket 56 secured to the upper horizontal planar surface of the minor bracket 20. The inboard control linkage rod 58 having opposing linkage connectors 60 and 62 threadingly and adjustably attached secures to the triangular center link 40 by a pivot pin 64 secured through the end members of the linkage connector 60 and spacer tube 36. The inboard end of the inboard control linkage rod 58 secures by a pivot pin 66 to an inner link mounting bracket 68 secured to the major bracket 14 as illustrated in FIG. 2.

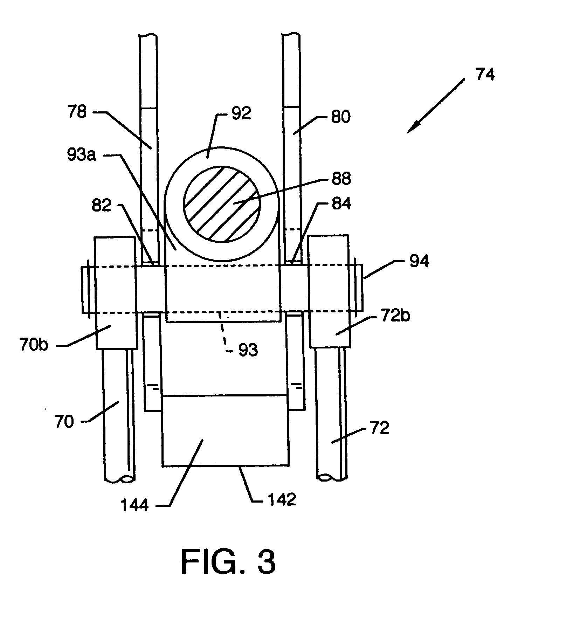

Vertical support and "counter balancing" of the arm 12, its load such as a video monitor and associated component members, is offered by parallel gas springs 70 and 72 having their stationary securement ends 70a and 72a pivotally secured by a pivot pin 76 to the lower portion of the major bracket 14 and the extendable securement ends 70b and 72b secured to a weight counter balance adjuster mechanism 74 located and secured to the underside of the inboard straight portion 12a of the arm 12 as also partially illustrated in **FIG. 2.** The weight counter balance adjuster mechanism 74 includes essentially triangular shaped vertically aligned and parallel opposing plates 78 and 80 extending perpendicularly and downwardly from the underside of the straight inboard arm portion 12a. Plates 78 and 80 include opposing algorithm derived arced slots 82 and 84 having a specific radius, length of arc and placement to provide minimum force inputs with,maximum stability as later described in detail. A ball socket retainer 86 aligns and secures to the ends of the plates 78 and 80. A threaded adjustment rod 88 having an adjustment nut 90 threadingly and adjustingly secures and aligns in the ball socket retainer 86, as also illustrated in FIG. 2, to adjust the securement ends 70b and 72b along the arced slots 82 and 84 of the weight counter balance adjuster mechanism 74. As illustrated in **FIG. 2**, a configured nut 92 threadingly and adjustably engages the non-stationary securement ends 70b and 72b of the gas springs 70 and 72. A pivot pin 94 extends through gas spring securement ends 70b and 72b and through the configured nut 92 as illustrated in **FIG. 3.**

An upper stop 96 secures to the back planar member 14b of the major bracket 14 to limit the upward vertical travel of the arm 12. Upward movement of the arm 12 is limited by impingement of the straight arm portion 12a against the flat surface 96a of the upper stop 96. An automatically engaged up lock mechanism 129 illustrated in **FIG. 7** and having a hidden and secure release, locks the arm 12 in the full upward storage position to prevent catastrophic movement of the arm such as by the gas spring pressure failure and to prevent unauthorized arm lowering by persons other than a trained operator. An angled bracket 128 secures to the upper surface of the straight arm portion 12a and includes a hole 128a. A bracket 130 having a spring loaded pin 131 having a beveled surface 133 at one end of the pin 131, secures to the upper and inner region of the major bracket 14. At or near the upward limit, the beveled spring loaded pin 131 slidingly engages hole 128a in the angled bracket 128 to secure the arm 12 in an upward position. When the operator desires to lower the system, the lock release lever is pulled to disengage the lock mechanism and provide for downward movement of the arm.

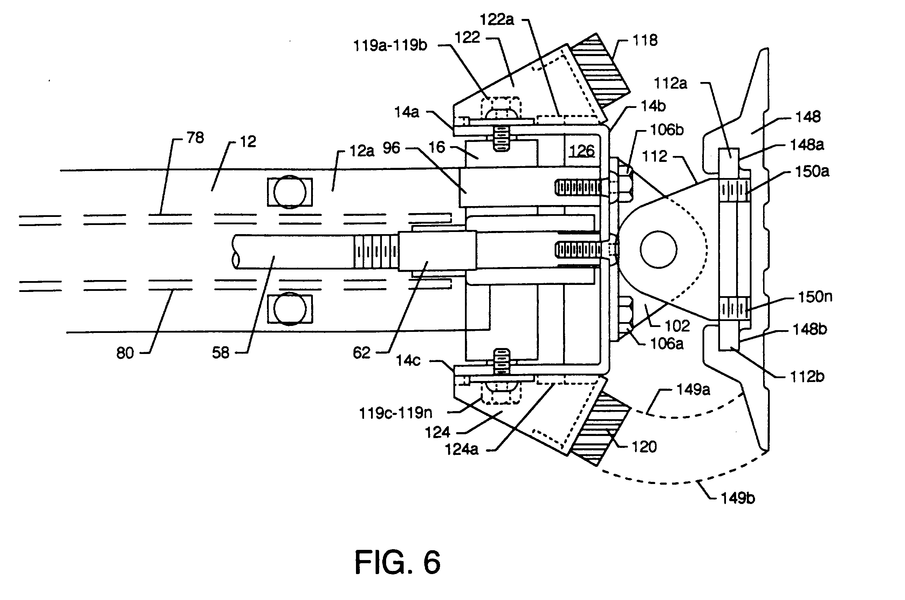

A lower stop 98 secures to the back planar member 14b of the major bracket 14 to limit downward vertical travel of the arm 12. Downward movement of the arm 12 is limited by impingement of the straight arm portion 12a against the flat surface 98a of the lower stop 98. As illustrated in **FIG. 2,** upper and lower rotation brackets 102 and 104 having spacer tubes 108 and 110 secure by a plurality of machine screws 106a-106h and appropriate hardware to the rear of the major bracket 14 on the back planar member 14b. Wall mount brackets 112 and 114 pivotally secure to the upper and lower rotation brackets 102 and 104 by machine screws 116a-116n. This pivoting arrangement allows the arm 12 and major bracket 14 and associated component members to swivel about a vertical axis up to as much as ±65° (130° total) of rotational arcular travel as limited by rubber bumper pads 118 and 120 mounted on adjustable angled brackets 122 and 124 on side members 14a and 14b respectively as illustrated in FIG. 6. The rotational travel of the major bracket 14 and arm 12 is limited by impingement of the rubber bumpers 118 and 120 on the mounting wall or, if appropriate, a mounting fixture such as illustrated in FIG. 6. A plurality of machine screws 119a-119n or other suitable fasteners secure through like and similar slotted holes 119 and 121 in each of the bracket support plates 122a and 124a of adjustable angled brackets 122 and 124 to adjust the rubber bumpers 118 and 120 inwardly or outwardly to adjust the amount of arcular travel of the major bracket 14, arm 12 and associated components including a suspended monitor in a swivel fixture mounted caddy.

**FIG. 2** illustrates a right side view of the lift system 10 where all numerals correspond to those elements previously described. Horizontal stiffener members 126 and 128 secure to planar members 14a, 14b and 14c in the region about the pivot tube 16 to lend extra support.

A down lock latch 132 including a hook end 134 pivots on a positionable and rotatable shaft 136 suspended by an orifice in the planar side member 14a of FIG. 1 and by a spring latch bracket 138. A spring latch mounting bracket 140 secures over and about the shaft 136 and serves as a rotatable platform for the down lock latch 132. The hook end 134 captures the angled end 142 of a bracket 144 aligned and secured between the lower edges of plates 78 and 80. One end of a spring 146 anchors to the stiffener 158 and the other spring end secures to the spring latch mounting bracket 140 to maintain pressure to keep the hook end 134 engaged with the angled end 142 of the bracket 144 for unloading of a video monitor. Engagement of the down lock latch 132 with the angled end 142 of bracket 144 maintains the arm 12 in a lowered secure position to preclude vertical runaway of an unweighted arm 12 such as when the supported equipment such as the video monitor is removed from the end of the arm 12. The down lock latch 132 is positioned by the operator and held in the proper position by spring 146 to selectably engage the angled end 142 of bracket 144 to lock the arm 12 in the downward position. The arm 12 may be unlocked by exerting a slight downward pressure on the arm 12 and rotating the rotatable shaft 136 to disengage the hook end 134 from the angled end 142 of the bracket 144.

The four bar linkage arrangements function to maintain the alignment of the minor bracket 20. Control linkage rods 46 and 58 represent the upper bars of a four bar linkage. The portions of the arm members 12 between pivot pin 26 and pivot pin 44 represent the outer and lower bar of the four bar linkage and the portions of the arm members 12 between pivot pin 44 and pivot pin 18 represent the inner or lower bar of one of the four bar linkages.

**FIG. 3** illustrates a view of the weight counter balance adjuster mechanism along line 3-3 of **FIG. 2** where all numerals correspond to those elements previously described. The pivot pin 94 extends through the securement ends 70b and 72b of the gas springs 70 and 72 and through a bore 93 in the configured nut 92. Pivot pin 94 is also illustrated in alignment with opposing arced slots 82 and 84 along which the pivot pin 94 is adjusted by rotation of the threaded adjustment rod 88.

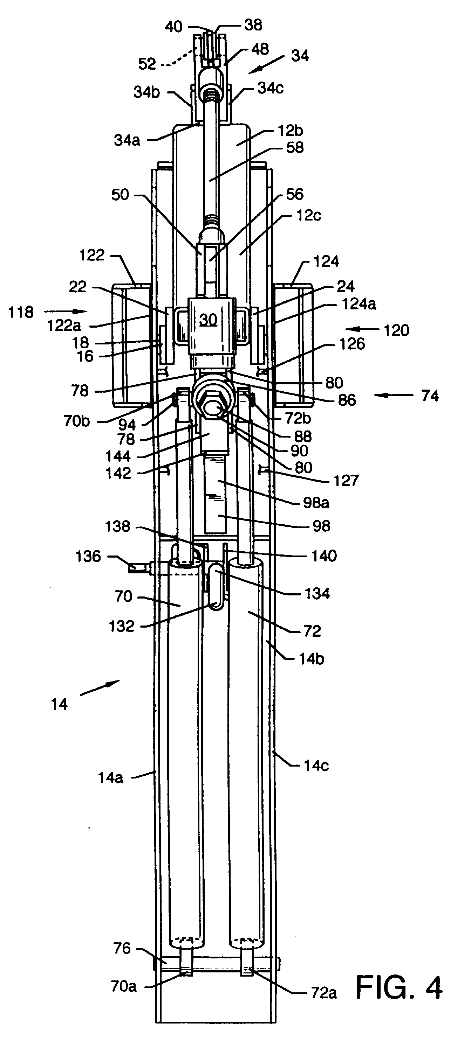

**FIG. 4** illustrates a front view of the lift system where all numerals correspond to those elements previously described.

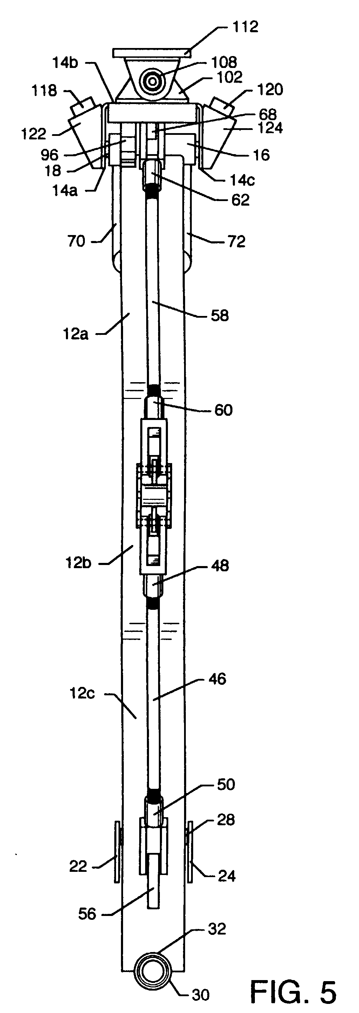

**FIG. 5** illustrates a top view of the lift system where all numerals correspond to those elements previously described.

**FIG. 6** illustrates the pivotal attachment of the major bracket 14 to a vertically oriented slotted mounting track 148 where all numerals correspond to those elements previously described. Planar end members 112a and 112b of the wall mount bracket 112 align in vertically oriented slots 148a and 148b respectively. A plurality of screws 150a-150n threadingly engage the vertical portion of the wall mount bracket 112 and are tightened to secure the wall mount bracket 112 within the slotted mounting track 148. As viewed from the top, the locus of the movement of the bumper 120 and arm 12 is represented by dashed lines 149a and 149b. Corresponding movement of bumper 118 allows rotation about the vertical axis of up to about 130° as determined by the inward or outward adjustment of the brackets 122 and 124.

**FIG. 7** illustrates a side view of the automatic up lock mechanism 129 engaging arm 12 in the full upward position where all numerals correspond to those elements previously described. Pin 131, having a beveled surface 133, aligns vertically in holes 130a and 130b of the horizontal members 130c and 130d of the bracket 130. A spring 135 aligns over and about the pin 131 between the horizontal member 130d and a stop pin 137 aligned horizontally through the pin 131. Stop pin 137 aligns also in a slotted hole 130e in the vertically aligned bracket member 130f to limit vertical travel of the pin 131 and to orient the pin 131 in the bracket 130. The spring 135 forcibly positions the pin 131 upwardly as illustrated to engage hole 128a in the angled bracket 128 secured to the upwardly positioned arm 12. A ramped surface 139 on bracket 128 impinges against the beveled surface 133 of the pin 131 forcing the pin 131 downward to allow capture entry of the pin 131 through hole 128a in the bracket 128 to lock the arm 12 in the upward position as illustrated. A hole 139 accommodates an operator rod 141 extending to the lower or other region of the major bracket 14. Operator rod 141 allows for downward positioning of the pin 131 to release the up lock 129 and can be located in a non-obvious area to preclude operation by unqualified personnel.

### MODE OF OPERATION

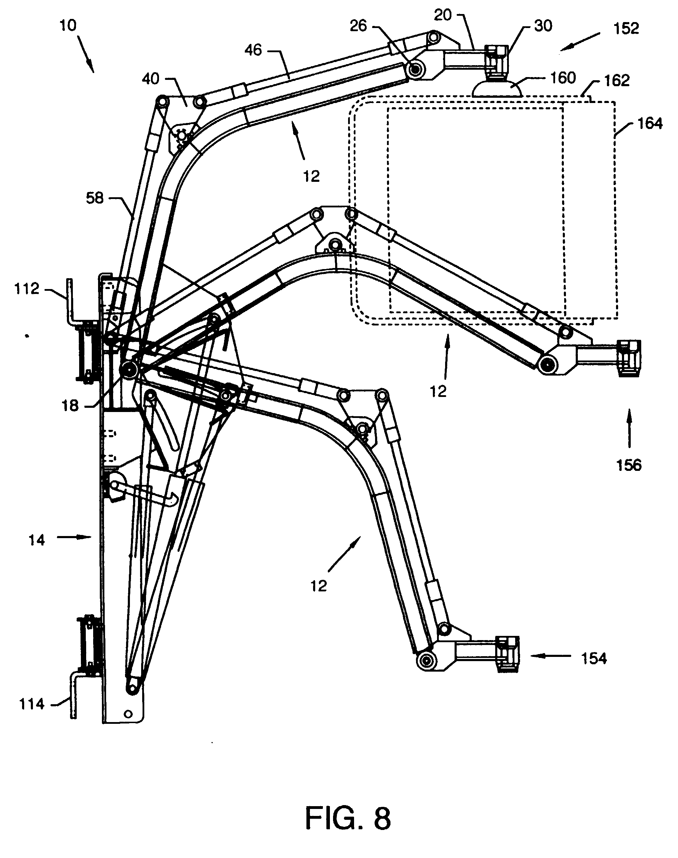

**FIG. 8** illustrates the range of vertical movement of the arm 12. Ranges vary from an upper and automatically locked position 152 and a lower and lockable position 154 and also a variety of intermediate positions illustrated as position 156. A tilt and swivel mount 160 illustrated in FIGS. 11 and 12, and previously referenced, secures and aligns in the bearing mount 30 for suspension of a caddy 162 and a monitor 164, shown in dashed lines.

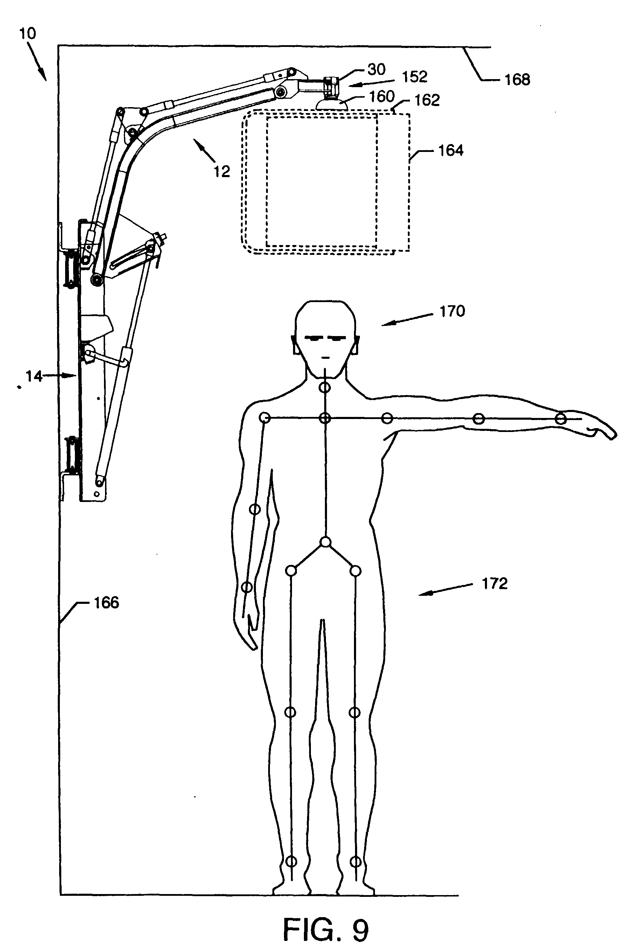

**FIG. 9** illustrates a video monitor suspension system 10 secured to a wall 166 and positioned in the upper and locked position 152 in close proximity to a ceiling 168 where all numerals correspond to those elements previously described. A suspended caddy 162 and monitor 164 are positioned over and above the head 170 of a person 172, thus allowing sufficient clearance between the head 170 of the person 172 and the lower portion of the monitor 164 and caddy 162. The suspension geometry of the video monitor suspension system 10 allows for maximum vertical clearance between its load and the floor, whereas systems supporting the load from the bottom of the monitor or caddy include geometry beneath which interferes with vertical clear space. The angled arm 12 also allows the monitor and caddy to be positioned higher than a system incorporating a straight arm which would interfere with and limit the upward vertical placement of the monitor and caddy, especially when space is critical such as in congested hallways, aisles, etc. The angled arm 12 also limits protrusion of the system into the normal work area when the arm is fully down. The angled arm counterbalances the weight of the supported equipment for maximum stability with minimal positioning force.

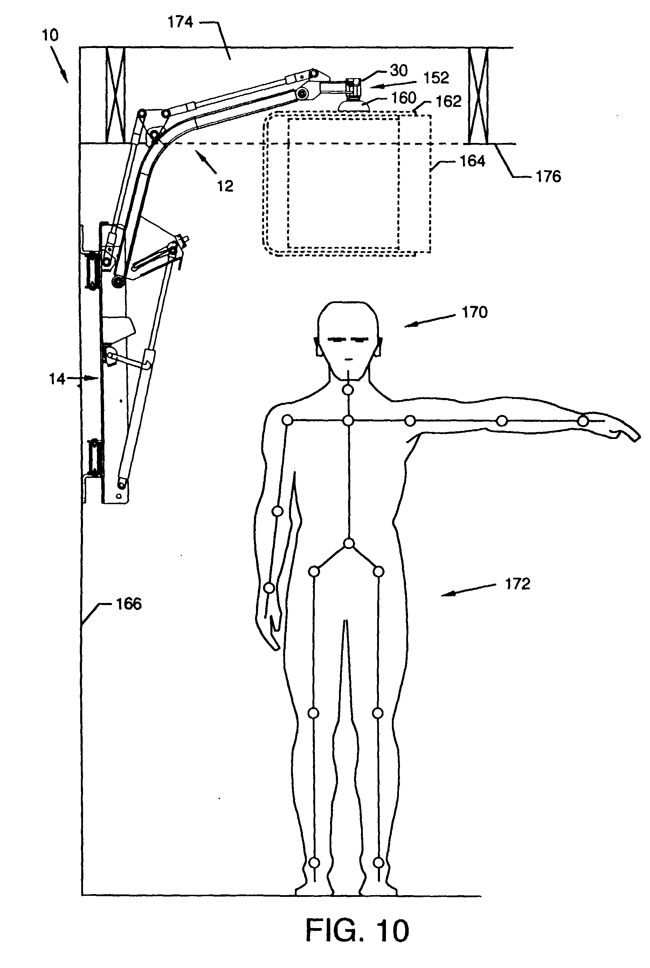

**FIG. 10** illustrates the incorporation of the video monitor suspension system 10 with a ceiling well 174 where all numerals correspond to those elements previously described. The video monitor suspension system 10 can also be incorporated in conjunction with a low ceiling 176 by including a ceiling well 174 extending into and above the level of the low ceiling 176 to accommodate the geometry of the arm 12 and its load in the upward position 152.

**FIG. 11** illustrates an isometric view of a tilt and swivel mount 160 with its cover removed, which secures to the bearing mount 30 on the minor bracket 20. The steel swivel mount 160 includes an inverted U-shaped channel member 200 having a top planar 202 member, sides 204 and 206 extending at right angles from the top member 202, and a cylindrical attachment member 208 secured to the top member 202 having internal threads 210. A series of hardware including metal, plastic, or other composition material in the shape of washers, nuts and bolts rotatably secures the U-shaped channel member 200 to the L-brackets 212 and 214. The brackets 212 and 214 include horizontal members 216 and 218 at right angles to vertical members 220 and 222 respectively providing an attachment means to the caddy 162.

**FIG. 12** illustrates a front view of the tilt and swivel mount 160 where all numerals correspond to those elements previously described. A bolt 224 extends through side 206 of the U-shaped channel member 200, through a plastic washer 226 of ultra high molecular weight polyethylene (UHMWP) material disposed between side 206 and side 220 of the bracket 212, through side 220 of the bracket 212, through a bronze washer 228, through a steel washer 230, through a spring washer 232, through a steel washer 234, and through a castellated lock nut 236. Any suitable plastic material can be utilized having similar static and dynamic coefficients of friction. Such materials can include olefin, plastics, and Tivars polymers. A mirror-like arrangement rotationally secures bracket side 222 to the side member 204 of the U-shaped bracket in the same manner as just described. Appropriate tension is applied between the head of the nut 224 and the nut 236 to allow manual rotational positioning of the U-shaped bracket 200 with respect to the L-brackets 212 and 214. Through selection of the appropriate precision spring washers 232 and use of a custom feeler gauge to establish precision spacing between the steel washers 230 and 234, a specific rotational friction setting can be established to provide appropriate tilt control for a broad range of video monitors.

The unique characteristics of the plastic material 226 allows smooth tilt adjustment of the tilt and swivel mount 160 and yet provides a constant frictional memory for the preset position of the video monitor. A horizontal poise is required of the operator to tilt the video monitor at which time it remains in the new position.

A further aspect of the invention is as follows:
(A) A video monitor suspension system (10) comprising:
   (a) a weight counter balance adjuster mechanism (74) attached to said angled arm (12) having algorithm-derived arced opposing slots (82, 84) in opposing plates (78, 80);
   (b) a configured nut (92) having a cross hole aligned about 90° to a threaded hole to accommodate a pivot pin (94);
   (c) a pivot pin (94) of configured nut (92) which aligns in arced slots (82, 84) of a weight counter balance adjuster mechanism (74) attached to said angled arm (12) having algorithm-derived arced opposing slots in opposing plates (78, 80);
   (d) threaded adjustment rod (88) extending through said configured nut (92) for the purpose of adjusting and positioning said pivot pin of configured nut (92) of weight counter balance adjuster mechanism (74) attached to said angled arm (12) having algorithm derived arced opposing slots (82, 84) in opposing plates (78, 80);
   (e) said opposing slots (82, 84) having physical location and shape are algorithm derived to provide stability after manual positioning force; and
   (f) weight counter balance adjuster mechanism (74) which adjustably accommodates a payload of up to 45.3Kg (100 pounds).

   The video monitor suspension system of (A) above can have one or more of the following groups of features B, C and D:
(B) a pair of gas springs secured at one end thereof to said major bracket;
   a pair of gas springs secured at the other end thereof to said pivot pin of said weight counter balance adjuster mechanism; and
   said gas springs supporting said angled arm, minor bracket and weight support by a bearing mount at the end of said minor bracket.
(C) a down lock latch for securing of angled arm in a downward position;
   an automatically engaging up lock for securing the arm in its uppermost position; and
   an up lock release arrangement to allow lowering of the arm.
(D) angled arm having vertical arcuate travel of 90°;
   angled arm having vertical adjustment range of about 75cm (30 inches); and
   major bracket having a horizontal swivel range of about 130°.

A further aspect of the invention is as follows:
(E) A video monitor suspension system (10) comprising:
   (a) an arm (12) pivotally attached at one end thereof to a major bracket (14);
   (b) a minor bracket (20) pivotally attached to the other end of said arm (12);
   (c) a four bar linkage (40, 46, 56, 58) secured along said arm whereby said four bar linkage causes said minor bracket (20) to maintain consistent alignment; and
   (d) an adjustable counterbalance means (74) to allow equilibrium support of supported equipment of a wide range of weights.

The video monitor suspension system of (E) above can have one or more of the following features either alone or in a combination:
- said minor bracket provides a consistent vertical alignment of an axis through which supported equipment can be rotated.
- the adjustable counterbalance mechanism allows the arm to counterbalance the supported equipment through a range of motion which is over 45° of rotation of the arm.
- an upper stop to limit upward movement of said arm; and a lower stop to limit downward movement of said arm.
- a down-lock mechanism to prevent the arm from springing upward if the supported equipment is suddenly removed.
- an up-lock mechanism to prevent the arm from dropping downward if the counterbalance spring should lose force for any reason.
- an up-lock which engages automatically each time the arm is moved to its uppermost position.
- the range of supported equipment weight is 13.6 to 45.3Kg (30 - 100 pounds).
- said adjustable counterbalance mechanism is positioned to said arm by computer analysis algorithm-derived slots in opposing plates fastened to said arm.
- said arm has a vertical arcuate travel of 90°.
- said minor bracket has a total vertical travel of about 75cm (30 inches).
- the major bracket has a horizontal swivel range of 130° plus or minus 65°.
- it includes a tilt swivel means.

### VIDEO MONITOR SUSPENSION SYSTEM PARTS LIST

- 10: video monitor suspension system
- 12: arm
- 12a: straight portion
- 12b: curved portion
- 12c: straight portion
- 14: major bracket
- 14a: back planar member
- 14b: side planar member
- 14c: side planer member
- 16: pivot tube
- 18: pivot pin
- 20: minor bracket
- 22: plate
- 24: plate
- 26: pivot pin
- 28: pivot tube
- 30: bearing mount
- 32: cutout
- 34: control link bracket
- 34a: bottom
- 34b: side
- 34c: side
- 36: spacer tube
- 38: spacer tube
- 40: center link
- 42: spacer tube
- 44: pivot pin
- 46: control linkage rod
- 48: linkage connector
- 50: linkage connector
- 52: pivot pin
- 54: pivot pin
- 56: link attachment bracket
- 58: control linkage rod
- 60: linkage connector
- 62: linkage connector
- 64: pivot pin
- 66: pivot pin
- 68: linkage mounting bracket
- 70: gas spring
- 70a: securement end
- 70b: securement end
- 72: gas spring
- 72a: securement end
- 72b: securement end
- 74: weight counter balance adjuster mechanism
- 76: pivot pin
- 78: plate
- 80: plate
- 82: arced slot
- 84: arced slot
- 86: ball socket retainer
- 88: threaded adjustment rod
- 90: nut
- 92: configured nut
- 93: bore
- 93a:
- 94: pivot pin
- 95:
- 95b:
- 96: upper stop
- 96a: flat surface
- 98: lower stop
- 98a: flat surface
- 100:
- 100a:
- 102: upper rotation bracket
- 104: lower rotation bracket
- 106a-h: machine screws
- 108: spacer tube
- 110: spacer tube
- 112: wall mount bracket
- 112a-b: planar end members
- 114: wall mount bracket
- 116a-n: machine screws
- 117a-n: machine screws
- 118: rubber bumper pad
- 119: slotted hole
- 120: rubber bumper pad
- 121: slotted hole
- 122: angled bracket
- 122a: bracket support plate
- 124: angled bracket
- 124a: bracket support plate
- 126: stiffener
- 128: angled bracket
- 128a: hole
- 129: up lock mechanism
- 130: bracket
- 130a-b: holes
- 130c-d: horizontal members
- 130e: slotted hole
- 130f: vertical member
- 131: spring loaded beveled surface pin
- 132: down lock latch
- 133: beveled surface
- 134: hood end
- 135: spring
- 136: shaft
- 137: stop pin
- 138: spring latch bracket
- 139: hole
- 140: spring latch mounting bracket
- 141: operator rod
- 142: angled end
- 144: bracket
- 146: spring
- 148: slotted mounting track
- 148a-b: slots
- 149a-b: dashed lines
- 150a-n: screws
- 152: upper position
- 154: lower position
- 156: mid-position
- 158: stiffener
- 160: tilt and swivel mount
- 162: caddy
- 164: monitor
- 166: wall
- 168: ceiling
- 170: head
- 172: person
- 174: ceiling well
- 176: low ceiling
- 200: U-shaped channel member
- 202: top planar member
- 204: side
- 206: side
- 208: top member
- 210: cylindrical attachment member
- 212: L-bracket
- 214: L-bracket
- 216: horizontal member
- 218: horizontal member
- 220: vertical member
- 222: vertical member
- 226: plastic washer
- 228: bronze washer
- 230: steel washer
- 232: precision spring washers
- 234: steel washer
- 236: castellated lock nut

## Claims

1. A suspension system (10) for a video monitor (164), characterised in that the system comprises:
an arm (12) a first end portion (12a) of which is pivotally attachable to a wall or other substantially vertical support (14) whereby the arm is pivotable in a substantially vertical path, and whose other end portion (12c) is pivotally attached to a carrier (20) for the video monitor (164);
maintaining means to maintain the carrier (20) in substantially the same angular disposition to the ground irrespective of the position of the arm (12) in said vertical path; and
holding means (70, 72, 74) to hold the arm (12) in any desired position in said vertical path.

2. A suspension system according to Claim 1, wherein said maintaining means comprises a linkage (40, 46, 56, 58) to link the carrier (20) to the wall or other support (14).

3. A suspension system according to Claim 1 or 2, wherein the arm (12) is a cranked arm defining a downwardly facing obtuse angle and the linkage (40, 46, 56, 58) is mounted on the arm.

4. A suspension system according to Claim 1, 2 or 3, wherein the holding means (70, 72, 74) comprises counterbalance means that can be overcome by manual force, thereby to move the arm from a first to a second position in the vertical path.

5. A suspension system according to Claim 4, wherein the counterbalance means comprises one or more gas springs or dash pots (70, 72) operatively inter-connecting arm (12) to wall or support (14).

6. A video monitor suspension system (10) comprising:
(a) an angled arm (12) pivotally attached at a first end to a pivotable vertically aligned major bracket (14);
(b) a minor bracket (20) pivotally attached to a second end of said angled arm (12); and
(c) four bar linkages (40, 46, 56, 58) secured along said angled arm (12) whereby said four bar linkages cause said minor bracket (20) to maintain horizontal alignment or disposition.

7. A video monitor suspension system (10) comprising:
(a) an arm (12) pivotally attached at a first end thereof to a major bracket (14);
(b) a minor bracket (20) pivotally attached to a second end of said arm (12);
(c) a four bar linkage (40, 46, 56, 58) secured along said arm whereby said four bar linkage causes said minor bracket (20) to maintain consistent alignment; and
(d) an adjustable counterbalance means (74) to allow equilibrium support of supported equipment of a wide range of weights.

8. A video monitor suspension system according to Claim 7, wherein said major bracket is pivotable along a vertically aligned axis.

9. A video monitor suspension system according to Claim 7 or 8, which further includes:
(a) one, two or more gas springs or dash pots secured at one end thereof to said major bracket;
(b) said gas spring or dash pots each being secured at their other end to a pivot pin of said adjustable counterbalance means; and
(c) said gas springs or dash pots support said arm, minor bracket and supported equipment.

10. A video monitor suspension system according to any of Claims 7 to 9, wherein vertical range of movement is at least as great as the length of the arm.
